# EUROPEAN PATENT APPLICATION

(11) **EP 4 703 412 A1**
(43) Date of publication of application: **04.03.2026**
(21) Application number: 25191035.2
(22) Date of filing: 22.07.2025
(51) Int. Cl.: C08J 5/18, A41G 1/00, B44C 5/06, C08J 3/22, C08J 7/06, B44C 1/24

(54) **ARTIFICIAL PLANT AND METHOD FOR MANUFACTURING THE SAME**

(30) Priority: 28.08.2024 CN 202411195633; 24.01.2025 CN 202510121529
(71) Applicant: Polygroup Plastic Products (Guangxi) Company Limited, Guigang City, Guangxi 537300 (CN)
(72) Inventor: LEE, Ee Teak, ChangPing (CN); CHOW, Lam Tim Simon, ChangPing (CN); LIN, Heng, ChangPing (CN)
(74) Representative: Finnegan Europe LLP

(57) **Abstract**

The present disclosure relates to an artificial plant and a method for manufacturing the same. The method for manufacturing the artificial plant described in the present disclosure includes: preparing a biaxially oriented polyester film with a desired color; cutting the biaxially oriented polyester film with the desired color into a desired shape to assemble into an artificial plant organ; and assembling the artificial plant organ into the artificial plant. The method for manufacturing the artificial plant provided in the present disclosure can improve the production efficiency of artificial plants, and improve the simulation degree and durability of artificial plants. Furthermore, the artificial plants manufactured by the method are more environmentally friendly and safer.

## Description

### TECHNICAL FIELD

The present disclosure relates to the technical field of artificial plant, and in particular, to an artificial plant and a method for manufacturing the same.

### BACKGROUND

Artificial plants belong to artificial ornamental arts. Artificial plants, such as artificial trees and artificial flowers, are popular with people as they have advantages of not being limited by sunlight natural condition and not needing for care. For example, traditional artificial plants made of polyvinyl chloride (PVC) material, have characteristics of tough, soft, and waterproof, etc. However, the production of PVC material requires the use of raw materials such as chlorine and ethylene, which is poor in environmental protection and may release harmful substances over time. Moreover, artificial plants made of PVC material can only present a desired color by paint spraying, which has relatively high cost on the one hand, and the simulation degree is not enough on the other.

### SUMMARY

Accordingly, it is necessary to provide an artificial plant and a method for manufacturing the same to improve the simulation degree of artificial plants, reduce the cost, be more environmentally friendly, and be safer for human body.

In a first aspect, the present disclosure provides a method for manufacturing an artificial plant, including the following steps: preparing a biaxially oriented polyester film with a desired color; cutting the biaxially oriented polyester film into a desired shape to assemble into an artificial plant organ; and assembling the artificial plant organ into the artificial plant.

In an embodiment, the artificial plant organ includes an artificial root, an artificial stem, an artificial leaf, an artificial flower, an artificial fruit, and an artificial seed.

In an embodiment, after preparing the biaxially oriented polyester film with the desired color, the method further includes: embossing the biaxially oriented polyester film to form an uneven embossing on a surface of the biaxially oriented polyester film.

In an embodiment, preparing the biaxially oriented polyester film with the desired color includes: preparing polyethylene terephthalate pellets; incorporating a color masterbatch into the polyethylene terephthalate pellets; and preparing the biaxially oriented polyester film from the polyethylene terephthalate pellets incorporated with the color masterbatch, wherein the biaxially oriented polyester film presents the desired color.

In an embodiment, preparing the biaxially oriented polyester film with the desired color includes: preparing polyethylene terephthalate pellets; incorporating a color masterbatch into the polyethylene terephthalate pellets; preparing the biaxially oriented polyester film from the polyethylene terephthalate pellets incorporated with the color masterbatch; and coloring the biaxially oriented polyester film by printing using a water-based ink, such that a surface of the biaxially oriented polyester film presents the desired color.

In an embodiment, preparing the biaxially oriented polyester film with the desired color includes: preparing polyethylene terephthalate pellets; obtaining the biaxially oriented polyester film from the polyethylene terephthalate pellets; and coloring the biaxially oriented polyester film by printing using a water-based ink, such that a surface of the biaxially oriented polyester film presents the desired color.

In an embodiment, preparing the polyethylene terephthalate pellets includes: crushing a recycled plastic product of polyethylene terephthalate material to obtain the polyethylene terephthalate pellets.

In an embodiment, coloring the biaxially oriented polyester film by printing using the water-based ink includes: coloring the biaxially oriented polyester film by single or multiple printings using water-based inks of one or more colors according to a desired design.

In an embodiment, the water-based ink includes a color water-based ink, a matte water-based ink, or a combination thereof.

In an embodiment, the water-based ink is printed by a laser etched roller.

In an embodiment, the water-based ink includes one or more additives selected from the following: light stabilizer, antistatic agent, flame retardant, anti-UV agent, antioxidant, matting agent, brightener, foaming agent, color-changing agent, and antibacterial agent.

In an embodiment, the water-based ink includes a vegetable oil.

In an embodiment, the water-based ink includes polytetrafluoroethylene.

In an embodiment, the color masterbatch includes one or more additives selected from the following: light stabilizer, antistatic agent, flame retardant, anti-UV agent, antioxidant, matting agent, brightener, foaming agent, color-changing agent, and antibacterial agent.

In a second aspect, the present disclosure further provides an artificial plant manufactured by the method described in the aforementioned aspect.

According to the method for manufacturing the artificial plant provided in the present disclosure, by cutting the prepared biaxially oriented polyester film (BOPET) with the desired color into the desired shape, artificial plant organs with various desired colors can be simulated efficiently, and the simulation degree of the artificial plant can be ensured. As BOPET used in the present method is more environmentally friendly than materials used in traditional artificial plants, and will not release harmful substances in subsequent use, the artificial plants manufactured by the present method are therefore further more environmentally friendly and safer.

In a third aspect, the present disclosure provides a method for manufacturing an artificial leaf, including the following steps: preparing a biaxially oriented polyester film with a desired color; and cutting the biaxially oriented polyester film into a shape of leaf.

In an embodiment, after preparing the biaxially oriented polyester film with the desired color, the method further includes: embossing the biaxially oriented polyester film to form an uneven embossing on a surface of the biaxially oriented polyester film.

In an embodiment, preparing the biaxially oriented polyester film with the desired color includes: preparing a raw material of polyethylene terephthalate particles; incorporating a color masterbatch into the raw material of polyethylene terephthalate particles; and preparing the biaxially oriented polyester film from the raw material of polyethylene terephthalate particles incorporated with the color masterbatch, wherein the biaxially oriented polyester film presents the desired color.

In an embodiment, preparing the biaxially oriented polyester film with the desired color includes: preparing a raw material of polyethylene terephthalate particles; incorporating a color masterbatch into the raw material of polyethylene terephthalate particles; preparing the biaxially oriented polyester film from the raw material of polyethylene terephthalate particles incorporated with the color masterbatch; and coloring the biaxially oriented polyester film by printing using a water-based ink, such that a surface of the biaxially oriented polyester film presents the desired color.

In an embodiment, preparing the biaxially oriented polyester film with the desired color includes: preparing a raw material of polyethylene terephthalate particles; obtaining the biaxially oriented polyester film from the raw material of polyethylene terephthalate particles; and coloring the biaxially oriented polyester film by printing using a water-based ink, such that a surface of the biaxially oriented polyester film presents the desired color.

In an embodiment, the water-based ink includes a color water-based ink, a matte water-based ink, or a combination thereof.

In an embodiment, the water-based ink is printed by a laser etched roller.

In an embodiment, preparing the raw material of polyethylene terephthalate particles includes: crushing a recycled plastic product of polyethylene terephthalate material to obtain the raw material of polyethylene terephthalate particles.

In an embodiment, the water-based ink includes polytetrafluoroethylene.

In an embodiment, the water-based ink includes a vegetable oil.

In a fourth aspect, the present disclosure further provides an artificial leaf manufactured from a biaxially oriented polyester film with a desired color.

In an embodiment, a crossed stripe is formed on a surface of the artificial leaf.

According to the method for manufacturing the artificial leaf provided in the present disclosure, by cutting the prepared BOPET film with the desired color into the shape of leaf, leaves with various desired colors can be simulated efficiently, and the simulation degree of the artificial leaf can be ensured. As BOPET used in the present method is more environmentally friendly than materials used in traditional artificial leaves, and will not release harmful substances in subsequent use, the artificial leaves manufactured by the present method are therefore further more environmentally friendly and safer.

### BRIEF DESCRIPTION OF THE DRAWINGS

**The patent or application file contains at least one drawing executed in color. Copies of this patent or patent application publication with color drawing(s) will be provided by the Office upon request and payment of the necessary fee.**
FIG. 1 shows a schematic flow diagram of a method for manufacturing an artificial plant according to one embodiment of the present disclosure;
FIG. 2 shows a schematic flow diagram of a method for manufacturing an artificial plant according to another embodiment of the present disclosure;
FIG. 3 shows a schematic flow diagram of the preparation of a biaxially oriented polyester film with a desired color in a method for manufacturing an artificial plant according to one embodiment of the present disclosure;
FIG. 4 shows a schematic flow diagram of the preparation of a biaxially oriented polyester film with a desired color in a method for manufacturing an artificial plant according to another embodiment of the present disclosure;
FIG. 5 shows a schematic flow diagram of the preparation of a biaxially oriented polyester film with a desired color in a method for manufacturing an artificial plant according to yet another embodiment of the present disclosure;

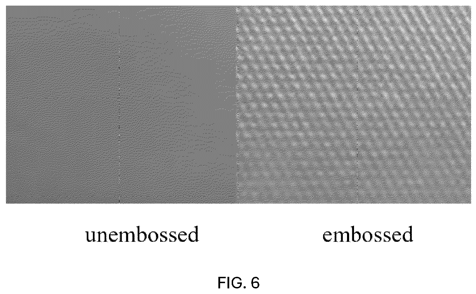

FIG. 6 shows a comparison figure of BOPET without embossing and with an uneven embossing formed thereon with embossing according to an embodiment of the present disclosure;
FIG. 7 shows a biaxially oriented polyester film prepared according to the flow shown in FIG. 3;
FIG. 8 shows a comparison figure of BOPET before and after printing using a matte ink according to one embodiment of the present disclosure;
FIG. 9 shows a schematic figure of BOPET obtained after coloring by multiple printings using water-based inks of various colors according to a desired design (upper panel), and a schematic figure of BOPET cut into a desired shape to assemble into an artificial plant organ (lower panel), according to one embodiment of the present disclosure;

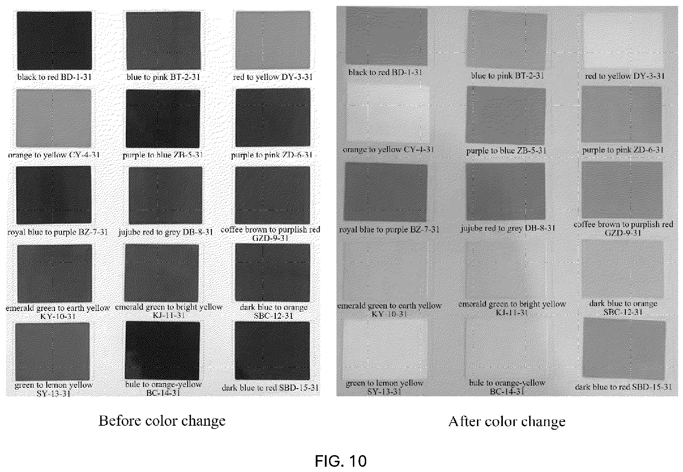

FIG. 10 shows a comparison figure of the color of BOPET prepared according to one embodiment of the present disclosure before and after being heated; and
FIG. 11 shows an artificial plant product manufactured according to some embodiments of the present disclosure.

### DETAILED DESCRIPTION

In order to facilitate the understanding of the present disclosure, the present disclosure will be described more fully hereinafter with reference to the related accompanying drawings. Various embodiments of the present disclosure are presented in the accompanying drawings. However, the present disclosure may be embodied in many different forms and is not limited to the embodiments described herein. Rather, these embodiments are provided to make the present disclosure more thorough and complete.

All technical and scientific terms used herein have the same meaning as commonly understood by those of ordinary skill in the art to which the present disclosure applies, unless otherwise defined. The terms used in the specification of the present disclosure herein are for the purpose of describing specific embodiments only and are not intended to limit the present disclosure.

The term "artificial plant" used herein refers to a decorative product that imitates plant form and is designed and produced from highly simulation materials.

The term "artificial plant organ" used herein refers to an artificial root, an artificial stem, an artificial leaf, an artificial flower, an artificial fruit, and an artificial seed of an artificial plant.

The term "artificial plant component" used herein refers to an auxiliary component involved in the process of manufacturing an artificial plant, including but not limited to a support, a filler, a fastener, an additive, a binder, and the like.

The term "biaxially oriented polyester film (BOPET)" used herein refers to a high quality film prepared from polyester resin. BOPET herein can be produced by any method known to those skilled in the art. For example, the following process is mainly used for production in China: PET drying, heating and melting, extrusion casting, longitudinal stretching of thick sheets, transverse stretching, winding, slitting and packaging, and then further processing. BOPET itself can also be glossy, and produce a similar effect to the reflection of real leaves when exposed to light.

The term "embossing" used herein refers to a process of changing the thickness of a material under the action of a mold to emboss concave and convex patterns or words on the surface of the material. In the present disclosure, BOPET is embossed to form uneven embossing on its surface.

The term "polyethylene terephthalate pellets" used herein refers to a raw material of polyethylene terephthalate, which is not limited in form, but is preferably in the form of particles, flakes, or scraps.

The term "coloring by printing" as used herein refers to a process of coloring BOPET by printing water-based ink onto it, wherein coloring includes printing color or transparent color (i.e., in the case of using a matte water-based ink). The term "desired design" used herein refers to a preset or conceived scheme on the type, hue, saturation, brightness, distribution of the product's color, as well as the shape, structure, etc. of the product or component made by those skilled in the art based on product requirements.

In order to make the objects, technical solutions and advantages of the present disclosure clearer, the present disclosure will be further described in detail below with reference to the accompanying drawings and some embodiments. It should be understood that the specific embodiments described herein are only used to explain the present disclosure and are not intended to limit the present disclosure.

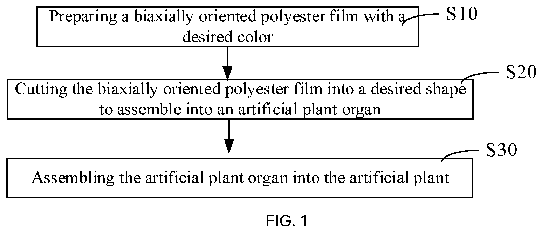

As shown in FIG. 1, in some embodiments, a method for manufacturing an artificial plant may include:
S10: preparing a biaxially oriented polyester film (BOPET) with a desired color.
S20: cutting the biaxially oriented polyester film into a desired shape to assemble into an artificial plant organ.
S30: assembling the artificial plant organ into the artificial plant.

In S10, the desired color refers to a color of BOPET that matches a color of a plant organ to be simulated, for example, it may include green, red, blue, yellow, brown, etc., but is not limited thereto. The description of the color of BOPET below is the same as here and will not be repeated. The method for manufacturing BOPET can be a method commonly used in the art, such as using a biaxial orientation stretching machine.

In S20, cutting may be performed using means known in the art, including but not limited to manual cutting, machine cutting, and the like. In some embodiments, the cut BOPET can be assembled into an artificial plant organ by methods commonly used in the art.

As known in the art, the artificial plant organ may include an artificial root, an artificial stem, an artificial leaf, an artificial flower, an artificial fruit, and an artificial seed. In the present disclosure, multifunctional BOPET can be optionally processed into one or more of artificial root, artificial stem, artificial leaf, artificial flower, artificial fruit, and artificial seed according to design requirements. For example, if the desired artificial plant organ is an artificial leaf, the cut BOPET, and other desired artificial plant components such as leaf veins, can be further assembled into an artificial leaf. The resulting artificial leaf has soft texture, high tensile strength, and is not easily damaged. Optionally, the shape of leaf is, for example, strip, oval, heart, needle, palm, etc. and combinations thereof.

In some embodiments, BOPET is processed into an artificial plant organ, that is, BOPET is processed into individual separate root, stem, leaf, and the like. However, in some embodiments, in S20, the artificial plant organ processed from the multifunctional biaxially oriented polyester film may sometimes be integrated, depending on design requirements and processing flow. For example, leaves and stems connected to each other can be produced on the same sheet of BOPET, that is, the cutting is designed such that the cut BOPET can be assembled into a stem with leaves such as a branch with leaves after certain processing. This can reduce processing steps and save costs, and reduce defects in artificial plants.

For example, in the case of manufacturing an artificial tree, BOPET can be cut into strips to form artificial leaves, in which it is designed to produce leaves and stems connected to each other on the same sheet of BOPET. That is, the leaf part are not cut apart from the stem part during cutting, and they are then wound around a fixture such as an iron wire to form a branch with leaves.

In some embodiments, in order to increase the thickness of a leaf and make the tree product look denser and more beautiful, two or more sheets of biaxially oriented polyester films can be placed in parallel operating positions by using, for example, a stretching machine, cut separately at the same time, and wound around two iron wires, respectively, and then the two wound branches are wound together to form a single, denser branch. This production mode of integrating multiple sheets of BOPET together is herein referred to as a "multi-winding" pattern, and the mode of manufacturing a single sheet of BOPET into a branch is referred to as a "single winding" pattern. In some embodiments, the manufactured branch can be in a single winding or multi-winding pattern, such as double winding, triple winding, etc. as required. In some embodiments, a thickness of a manufactured single sheet of BOPET can be 10 µm to 200 µm, for example, 50 µm, 70 µm, or 100 µm. In some embodiments, the thickness of the single sheet of BOPET can be, for example, equal to or more than 65 µm, which makes the artificial tree in the aforementioned "double winding" pattern not only dense and beautiful, but also closer to real trees.

In S30, the artificial plant organ can be assembled into an artificial plant product by any suitable means, and the artificial plant component can be used to better complete the assembly, which is including but not limited to a support, a filler, a fastener, an additive, and the like. The support and the filler can be any objects used to support and fill the plant organ, such as used as an internal material of an artificial plant stem, which may include foam, plastic, metal, fiber, and the like. The fastener is used to better fix the plant organ, such as connecting the artificial leaves and artificial stems together, and it may include plastic, metal, fiber, and the like. And the additive can be any suitable auxiliary agent added to achieve certain functions or effects, including but not limited to binder, fragrance agent, glitter, and the like.

For example, in the case of manufacturing an artificial tree, branches are manufactured, and suitable materials are used to serve as a tree trunk and a base, and they are finally assembled together to form an artificial tree product.

According to the method for manufacturing the artificial plant provided in the present disclosure, by cutting the prepared BOPET with the desired color into the desired shape, plant organs with various desired colors can be simulated efficiently, and the simulation degree of the artificial plant can be ensured. As BOPET used in the present method is more environmentally friendly than materials used in traditional artificial plants, and will not release harmful substances in subsequent use, the artificial plants manufactured by the present method are therefore further more environmentally friendly and safer.

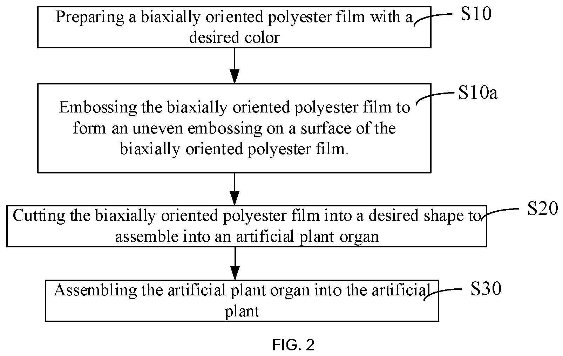

As shown in FIG. 2, in other embodiments, a method for manufacturing an artificial plant may include:
S10: preparing a biaxially oriented polyester film with a desired color.
S10a: embossing the biaxially oriented polyester film to form an uneven embossing on a surface of the biaxially oriented polyester film.
S20: cutting the biaxially oriented polyester film into a desired shape to assemble into an artificial plant organ.
S30: assembling the artificial plant organ into the artificial plant.

In S10a, the uneven embossing can be formed on the surface of the biaxially oriented polyester film with the desired color by embossing with an embossing roller. A shape of the embossing can be designed as required, including but not limited to circle, square, rectangle, quadrilateral, triangle, oval, strip, etc. The biaxially oriented polyester film can be partially or completely embossed, depending on the design requirements. For example, the biaxially oriented polyester film can be partially embossed, wherein the embossed portion is subsequently processed into an artificial leaf, while the unembossed portion is subsequently processed into an artificial stem. In this embodiment, by embossing the surface of BOPET with the desired color, the overall glossiness of the surface of BOPET can be appropriately reduced. In other words, the overall glossiness of the surface of the prepared artificial organ can be changed, which makes the prepared artificial organ more closely resemble the real plant organ in terms of visual realism. For example, by pasting artificial leaves with different glossiness on the artificial stem according to the growth law of plants, the simulation degree of the artificial plant can be effectively improved, wherein different glossiness can be selected and given to different plant organs as required, that is, different plant organs can have different glossiness. For example, the glossiness of the artificial leaf may be brighter than that of the artificial stem, so as to make it more closely resemble the real plants in terms of visual realism.

In some embodiments, the method may not include the step S10a: embossing the biaxially oriented polyester film to form an uneven embossing on a surface of the biaxially oriented polyester film. In other words, in some embodiments, it is not necessary to form embossing on the surface of the artificial leaf to change the overall glossiness of the artificial leaf, and there is no limitation in the present disclosure for this.

The relevant contents involved in S10, S20, and S30 are consistent with the aforementioned contents and will not be repeated here.

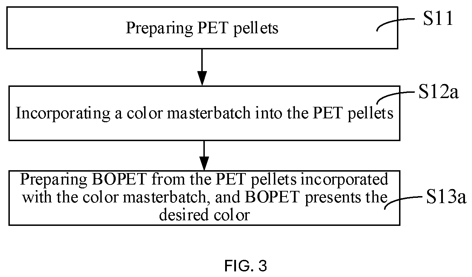

Referring to FIG. 3, in some embodiments, step S10 of preparing a biaxially oriented polyester film with a desired color may include the following steps:
S11: preparing polyethylene terephthalate (PET) pellets;
S12a: incorporating a color masterbatch into the PET pellets; and
S13a: preparing BOPET from the PET pellets incorporated with the color masterbatch, wherein BOPET presents the desired color.

In step S11, the PET pellets can be obtained by crushing a recycled PET plastic product (e.g., a plastic water bottle). Specifically, the used PET plastic water bottle is recycled, and then is crushed into PET pellets using, for example, a crusher. In the present disclosure, the recycling rate of the PET plastic product can reach 100%, that is, the raw materials for preparation can use the crushed PET pellets completely, without adding or supplementing other substances as main raw materials. The PET plastic water bottle is used in huge quantities and has a wide range of sources. In addition, the PET used for the body of bottle is of high purity, which reduces the purification cost and is more environmentally friendly. In an alternative embodiment, the PET pellets can also be purchased directly, which is not limited in the present disclosure.

In S12a, the color masterbatch is a coloring agent specifically used for polymer materials, which is composed of pigment, carrier, additive, and other components, and is an aggregate prepared by attaching and loading a pigment exceeding a constant amount to a resin. During processing, a resin or product with a desired color can be produced by incorporating uncolored plastic particles with a small amount of color masterbatch.

A functional color masterbatch can be used as required. The functional color masterbatch can be prepared by adding one or more of additives such as light stabilizer, antistatic agent, flame retardant, anti-UV agent, antioxidant, matting agent, brightener, foaming agent, color-changing agent, and antibacterial agent to an ordinary color masterbatch, depending on functional requirements. The type, amount, and combination of the above additives can be adjusted by those skilled in the art according to actual requirements. Under normal circumstances, the above additives commonly used in the art can be applied to the present disclosure. The addition of conventional additives by default has no substantial effect on the color presentation of the color masterbatch, unless otherwise stated (for example, a color-changing agent may affect the color of the color masterbatch due to environmental changes).

In some embodiments, BOPET with a color of an ordinary color masterbatch, such as green, yellow, brown, white, etc., can be prepared by incorporating the ordinary color masterbatch into PET pellets, and the surface of BOPET has a bright effect and high glossiness.

In some embodiments, a flame retardant color masterbatch can be used, such that BOPET not only presents the color of the flame retardant color masterbatch (such as green, yellow, brown, white, etc.), but also has a flame retardant effect, thus make the artificial plant product manufactured from BOPET also have a flame retardant effect. At this time, the surface of BOPET also has a bright effect and high glossiness. In some embodiments, a halogen-free flame retardant is used in the flame retardant color masterbatch. According to the composition, flame retardants can be divided into two categories: halogen-containing flame retardants and halogen-free flame retardants. Halogen-containing flame retardants will release a large amount of smoke and harmful gases in the event of fire, causing great harm to people's health and the environment. Due to concerns about human health and environmental protection, halogen-free flame retardants have attracted increasing attention due to their advantages such as high efficiency, environmental protection and safety. Halogen-free flame retardants are mainly divided into phosphorus-based flame retardants (such as ammonium polyphosphate, red phosphorus, and melamine salts; phosphate-based, phosphazene, and phosphaphenanthrene compounds), nitrogen-based flame retardants (such as melamine and its derivatives, dicyandiamide and its derivatives, etc.), silicon-based flame retardants (such as silicone), inorganic metal flame retardants (such as magnesium hydroxide, aluminum hydroxide, hydrotalcite, etc.), bio-based flame retardants (such as vegetable oils with different phosphorus groups introduced into the main chain), etc. The type and amount of the halogen-free flame retardant can be selected as required. Under normal circumstances, halogen-free flame retardant additives commonly used in the art can be applied to the present disclosure. The prepared BOPET not only presents the color of the flame retardant color masterbatch (such as green, yellow, brown, white, etc.), but also has a flame retardant effect.

In some embodiments, a matte color masterbatch can be used to prepare BOPET with the color of the matte color masterbatch, such as green, yellow, brown, white, etc., wherein the addition of matting agent makes the surface of BOPET have a matte effect and low glossiness. The matting agent can be, for example, epoxy resin matting agent, ND-110 matting agent, L-1030/1031 matting agent, metal soap, wax, and the like.

In some embodiments, a brightening color masterbatch can be used to prepare BOPET with the color of the brightening color masterbatch, and the addition of brightener makes the surface of BOPET have a brightening effect and high glossiness.

In some embodiments, an anti-UV color masterbatch can be used to prepare BOPET with an anti-UV effect, and BOPET can present the color of the color masterbatch, such as green, yellow, brown, white, etc. The addition of anti-UV agent makes BOPET resistant to ultraviolet rays and prevents or delays discoloration. Common anti-UV agents include inorganic anti-UV agents, such as titanium dioxide and zinc oxide; organic anti-UV agents, such as UV absorber UV-531, anti-UV finishing agent HTUV100, etc.

In some embodiments, a matte flame retardant color masterbatch can be used to prepare BOPET with a flame retardant effect, and BOPET can present the color of the matte flame retardant color masterbatch, such as green, yellow, brown, white, etc., while the surface of BOPET has a matte effect and low glossiness.

Specifically, PET pellets incorporated with color masterbatch (which may be ordinary color masterbatch or functional color masterbatch) may be melted to obtain polyester resin blocks, and then the polyester resin blocks may be dried, melted, extruded, cast, and stretched longitudinally and transversely to obtain BOPET, wherein the color masterbatch incorporated into the PET pellets can be of any color, such that BOPET to be prepared can present a desired color, wherein BOPET presents the color corresponding to the color masterbatch.

In the embodiment shown in FIG. 2, BOPET with a desired color is directly prepared by adding color masterbatch to PET pellets, and subsequent cutting is performed without additional coloring, afterwards an artificial plant organ and an artificial plant product with the desired color is obtained. This can significantly reduce the production cost while improving production efficiency. In addition, the artificial plant obtained in this way itself presents a corresponding color, such as green or brown, no need to worry about fading and is highly durable.

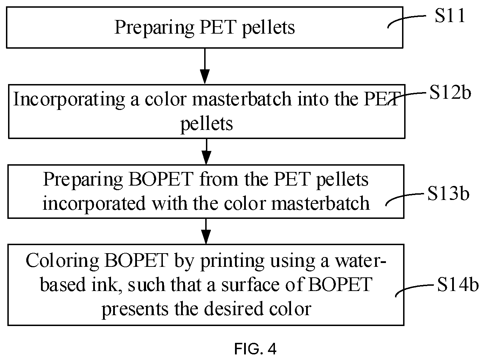

Referring to FIG. 4, in other embodiments, step S10 of preparing a biaxially oriented polyester film with a desired color may include the following steps:
S11: preparing PET pellets;
S12b: incorporating a color masterbatch into the PET pellets;
S13b: preparing BOPET from the PET pellets incorporated with the color masterbatch; and
S14b: coloring BOPET by printing using a water-based ink, such that a surface of BOPET presents the desired color.

Steps S11, S12b, and S13b in these embodiments may correspond to steps S11, S12a, and S13a in the aforementioned embodiments, and will not be repeated here.

For S14b, in some embodiments, BOPET with the corresponding color (corresponding to the color of the color masterbatch) prepared in step S13b can be colored by printing using water-based ink, for example, by a high-speed printer. Compared with spraying and other methods, coloring by printing is more environmentally friendly and less likely to fade, while having the advantages of fast speed and high efficiency. Specifically, the high-speed printer can print for coloring using common tools in the art, such as a laser etched roller, wherein the laser etched roller is used for performing an engraving by laser with higher processing accuracy, and the processing groove formed by laser engraving is a U-shaped honeycomb groove, such that the depth of water-based ink required when printing on the surface of BOPET can be reduced. Compared with the traditional printing method using an electric engraving roller, coloring BOPET by printing using a laser etched roller can save the amount of water-based ink and reduce costs.

Water-based ink can also be referred to as water ink. Flexo water-based ink is also called liquid ink, which is mainly composed of water-soluble resin, organic pigment, solvent, and related additives through composite grinding and processing. Water-based inks are particularly suitable for packaging and printing products with strict hygiene requirements, such as cigarettes, alcohol, food, beverages, medicines, and children's toys. Water-based ink uses water as a diluent, without using volatile organic solvents. Organic solvents in traditional inks are easy to volatilize, which can easily pollute the environment and endanger human health. Compared with traditional inks, the water-based ink used in the present disclosure is more environmentally friendly and safer.

Typically, water-based inks contain polymethyl methacrylate (PMMA). In some embodiments, the melting temperature of PMMA in the water-based ink can be increased to enhance the flame retardant effect. For example, PMMA with a high melting temperature, such as 90°C or 100°C, is used instead.

In some embodiments, one or more additives such as light stabilizer, antistatic agent, flame retardant, anti-UV agent, antioxidant, matting agent, brightener, foaming agent, color-changing agent, and antibacterial agent, etc., can be added to the water-based ink to obtain a functional water-based ink. The type, amount, and combination of the above additives can be adjusted by those skilled in the art according to actual requirements. Under normal circumstances, the above additives commonly used in the art can be applied to the present disclosure. The addition of conventional additives by default has no substantial effect on the color of the water-based ink, unless otherwise stated (for example, a color-changing agent may affect the color of the water-based ink due to environmental changes).

In some embodiments, the water-based ink can include non-transparent colored (e.g., purple, yellow, white, etc.) water-based ink and/or transparent matte water-based ink. That is, the water-based ink used for coloring by printing can include a non-transparent colored water-based ink, a transparent matte water-based ink, or a combination thereof.

In some embodiments, a colored water-based ink can be printed on BOPET with corresponding color (corresponding to the color of the color masterbatch) to change the color presented on the surface of BOPET, thereby obtaining BOPET with the desired color. The concentration of pigment in the water-based ink can be adjusted according to actual requirements. In actual production, when it is required to manufacture an artificial plant or artificial plant organ with brighter color and higher color saturation, the concentration of pigment in the water-based ink can be increased, such that the surface color of BOPET is brighter and more saturated. For example, by changing the concentration of pigment in water-based ink, artificial leaves with different brightness and color saturation can be manufactured, to simulate leaves of different types and in different growth stages. Furthermore, these artificial leaves can be fixed onto the trunk of the artificial tree according to the growth law of the tree, which can further improve the simulation degree of the artificial tree. For example, a light green BOPET is prepared by incorporating light green masterbatch into PET pellets. If the desired color of BOPET is dark green, then the surface color of BOPET can be changed from light green to dark green by printing dark green water-based ink.

In some embodiments, transparent matte water-based ink may also be printed on BOPET with corresponding color (corresponding to the color of the color masterbatch). Matte water-based ink includes full-matte ink and semi-matte ink. The full-matte ink has a matte degree of, for example, 5 GU to 15 GU, and semi-matte ink has a matte degree of, for example, 15 GU to 30 GU. Full-matte ink and/or semi-matte ink can be selected according to actual requirements. Matte water-based ink can provide a non-gloss or weak gloss effect, such that the glossiness of the surface of BOPET with corresponding color (corresponding to the color of the color masterbatch) is changed, thereby obtaining BOPET with the desired glossiness. By printing transparent matte water-based ink, the color and glossiness of BOPET can be closer to real plants, thereby improving the simulation degree of the artificial plant produced by the method. For example, a green BOPET is prepared by incorporating green masterbatch into PET pellets. If BOPET with matte glossiness is required, then the surface glossiness of BOPET can be changed to matte by printing full-matte ink and semi-matte ink.

In some embodiments, colored water-based ink and transparent matte water-based ink may be simultaneously printed on BOPET with corresponding color (corresponding to the color of the color masterbatch) to obtain BOPET with desired color and glossiness.

In some embodiments, the water-based ink can include a vegetable oil. Vegetable oil, as a resin co-solvent, helps to reduce harmful substances in the ink and reduce potential harm to the environment and human body. In addition, vegetable oil in water-based ink can improve the fluidity, adhesion and drying properties of the ink, thereby improving the printing quality and color saturation of the water-based ink. Furthermore, by adding vegetable oil into the water-based ink, the drying speed of the ink can be adjusted by adjusting the proportion of the vegetable oil. The vegetable oil that can be added to the water-based ink include, but are not limited to, linseed oil, soybean oil, sunflower oil, castor oil, coconut oil, and the like. After years of research on vegetable oils that can be added, soybean oil has been shown to be the best choice. The advantages of adding soybean oil are environmental protecting, and renewable, harmless, and has small dosage, scratch resistance, light and heat resistance, and easy deinking and processing. Therefore, in the present disclosure, the vegetable oil added to the water-based ink may be, for example, soybean oil. Soybean oil is used to replace the mineral oil in the traditional water-based ink, which further improves the environmental friendliness of the present method.

In some embodiments, the water-based ink can include polytetrafluoroethylene (i.e., PTFE). PTFE is usually added to the water-based ink in the form of micro powder to improve various properties of the ink. For example, PTFE micro powder can significantly improve the scratch resistance of the water-based ink. This is because PTFE has extremely high abrasive resistance and scratch resistance, and a protective film can be formed by adding it to the ink, reducing the risk of surface scratches. Additionally, PTFE has an extremely low friction coefficient, which makes it an ideal lubricant. Adding PTFE micro powder to the water-based ink can reduce the friction coefficient of the surface of printing ink, thereby improving quality and efficiency of printing. In addition, the addition of PTFE micro powder can improve the fluidity of the ink, making it easier to distribute evenly during printing, reducing clogging and unevenness. Furthermore, PTFE has excellent chemical resistance and weather resistance, and these properties can be transferred to the water-based ink containing PTFE, allowing it to maintain good performance in harsh environments. Moreover, PTFE itself is an environmentally friendly material that does not contain heavy metals and other harmful substances, so its application in the water-based ink meets the requirements of modern green printing. Besides, PTFE is also considered to be a material being safe for human body and does not pose a threat to human health. Meanwhile, PTFE can increase the combustion point by changing the property of the water-based ink, reducing the probability of PTFE being ignited in the flame. Adding PTFE micro powder into the water-based ink can also improve the flame retardance of the water-based ink, making the artificial plant less likely to fire and reducing safety hazards of the artificial plant. In some embodiments, the weight ratio of PTFE micro powder in the entire water-based ink can be 0.1% to 3%.

In some embodiments, the water-based ink may include a flame retardant, such that the water-based ink has a flame retardant effect, and thus the artificial plant product manufactured from BOPET printed with the water-based ink also has a flame retardant effect. In some embodiments, a halogen-free flame retardant is used in the water-based ink. The type and amount of the halogen-free flame retardant can be selected as required. Under normal circumstances, halogen-free flame retardants commonly used in the art can be applied to the present disclosure.

In some embodiments, the water-based ink may include an anti-UV agent, such that the water-based ink has the effect of resisting ultraviolet rays and preventing or delaying discoloration, and thus the artificial plant product manufactured from BOPET printed with the water-based ink also has the same effect. The type and amount of the anti-UV agent can be selected as required. Under normal circumstances, anti-UV agents commonly used in the art can be applied to the present disclosure.

In some embodiments, the water-based ink may contain a color-changing agent, for example, a thermochromic agent or a photochromic agent. In this way, the color of the water-based ink can change with temperature or light, and the color will restore to its original state when the original temperature and light are restored, which in turn makes the artificial plant product manufactured from BOPET printed with the water-based ink also has the same effect. Color-changeable artificial plants can be used in a variety of application scenarios. For example, in some cases, color-changeable artificial plants can provide convenience as an indication of temperature changes or light changes. In other cases, color-changeable artificial plants can provide people with visual changes and experience different effects in terms of visual realism. The type and amount of the color-changing agent can be selected as required. Under normal circumstances, color-changing agents commonly used in the art can be applied to the present disclosure.

For S14b, in some embodiments, coloring BOPET by printing may include changing the surface color of BOPET by printing. Sometimes, due to the requirements or limitations of raw materials and production conditions or the final product process or other reasons, the color of the color masterbatch incorporated into the PET pellets may not be consistent with the final desired color. For example, in some cases, a production line can only produce BOPET with a specific color. If the color of the produced BOPET is required to be changed, it will be at a relatively high cost. At this time, the surface of BOPET with a specific color can be colored by printing to present the desired color, which can reduce production costs. For example, a light green BOPET is prepared by incorporating light green masterbatch into PET pellets. If the desired color of the artificial plant or organ is dark green, then the surface color of BOPET can be changed from light green to dark green by printing dark green water-based ink.

In some embodiments, coloring BOPET by printing may include changing the surface glossiness of BOPET by printing. For example, a brightener or a matting agent can be added to the water-based ink. The addition of brightener increases the surface glossiness of BOPET printed with the water-based ink, and the addition of matting agent reduces the surface glossiness of BOPET printed with the water-based ink. The type and amount of the brightener or matting agent can be adjusted as required to obtain BOPET with the desired glossiness. The type and amount of the brightener or matting agent can be selected as required. Under normal circumstances, brighteners or matting agents commonly used in the art can be applied to the present disclosure.

In some embodiments, BOPET can be colored by printing entirely or partially. According to design requirements, BOPET can be colored by printing entirely, such that the entire BOPET (referring to a single production unit in the production line, in any form, such as a sheet or a block, etc.) presents the printed color. Alternatively, according to design requirements, BOPET can also be colored by printing partially, that is, a part of BOPET (such as a part of a sheet or a block) presents the printed color, and a part of BOPET maintains the color before printing (that is, the color presented after adding the color masterbatch). The partial coloring can be performed using any partial printing method known to those skilled in the art.

In some embodiments, BOPET may be colored with only one color, by either single or multiple printings. For example, in some cases, the thickness of the color layer can be adjusted by multiple printings on BOPET with the same color.

In other embodiments, BOPET can be colored with multiple colors simultaneously or sequentially by printing. For example, according to the desired design, if the entire BOPET (e.g., a sheet or a block, etc.) is desired to have multiple colors at the same time, BOPET can be colored with multiple colors simultaneously using techniques known in the art, for example, using a printing template, or BOPET can be colored sequentially, for example, using a printing template.

In some embodiments, coloring BOPET by printing using the water-based ink may include: coloring BOPET by printing on one side or both sides using the water-based ink. For example, in some embodiments, BOPET may be colored by printing on one side using the water-based ink. In some embodiments, BOPET may be colored by printing on both sides using the water-based ink. When coloring by printing on both sides, the colors printed on both sides can be the same or different, as appropriate.

The aforementioned embodiments can be combined arbitrarily unless they are mutually exclusive.

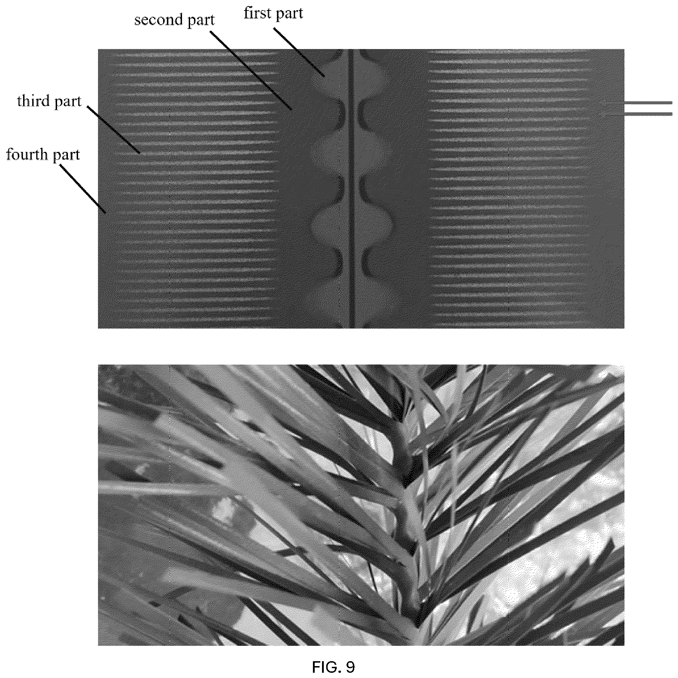

As shown in the upper panel of FIG. 9, in the process of producing an artificial plant such as artificial tree, it may be required to produce a sheet of BOPET having light green, dark green, brown, and white colors at the same time. According to design requirements, the first part is brown, the second part is dark green, the third part is white, and the fourth part is light green. In some embodiments, the manufacturing process is as follows: a light green BOPET (i.e., the light green of the fourth part) is obtained by using a light green masterbatch, then the second part is printed with a dark green water-based ink such that the second part presents dark green, and then the first part is printed with a brown water-based ink such that the first part presents brown, and finally the third part is printed with a white water-based ink such that the third part presents white. In this embodiment, there is no special limitation on the order for printing of the first, second and third parts, which can be adjusted as required. The printing of each part is strictly performed in strict accordance with the shape of each part, and there is no overlapping printing (no overlapping printing can save costs). And the shape and area of each part can be designed as required without any special limitations. In other embodiments, overlapping printing can be performed to reduce the difficulty of printing, for example, the manufacturing process is as follows: a light green BOPET (i.e., the light green of the fourth part) is obtained by using a light green masterbatch, then the first and second parts are printed with a dark green water-based ink such that the first and second parts present dark green, and then the first part is printed with a brown water-based ink such that the first part presents brown, and finally the third part is printed with a white water-based ink such that the third part presents white. There is no particular limitation on the order of performing brown printing and white printing, and the order can be adjusted as required.

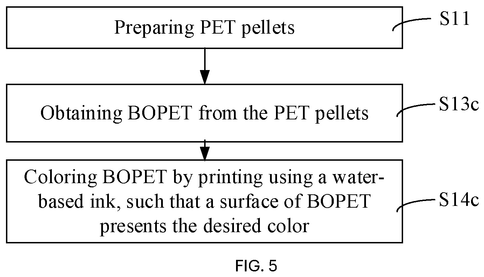

Referring to FIG. 5, in other embodiments, step S10 of preparing BOPET with a desired color may include the following steps:
S11: preparing PET pellets;
S13c: obtaining BOPET from the PET pellets; and
S14c: coloring BOPET by printing using a water-based ink, such that a surface of BOPET presents the desired color.

Step S11 in these embodiments can refer to step S11 in the aforementioned embodiments, and will not be repeated here.

In these embodiments, there is no need to add a color masterbatch into the PET pellets. BOPET having the same color as PET raw materials, such as colorless and transparent BOPET, can be prepared by PET pellets. Then, BOPET with the desired color can be prepared by performing step S14c.

Step S14c in these embodiments is substantially the same as step S14b in the aforementioned embodiments. In these embodiments, the printed water-based ink includes non-transparent colored (e.g., purple, yellow, white, etc.) water-based ink and/or transparent matte water-based ink, which can change both the color presented on the surface of BOPET, and the glossiness of the surface of BOPET. The water-based ink in step S14c can refer to the water-based ink in the aforementioned embodiments, and will not be repeated here.

Returning to FIG. 2, in some embodiments, in step S10a, the surface of the BOPET can be subjected to a pressure by using tools such as a concave-convex molds and an embossing roller, resulting in plastic deformation on the surface of BOPET, which in turn generating textures or patterns on the surface of BOPET. These textures and patterns also change the way light is reflected and scattered. Specifically, the uneven surface structure formed by embossing will cause light to diffusely reflect on the surface of BOPET, reducing the proportion of specular reflection and thus reducing glossiness. In this way, patterns with different depths and sizes can be embossed as required, and artificial plant organs with different glossiness and sizes can thus be obtained, to simulate plant organs at different growth stages, which further improves the simulation degree of the artificial plants and thereby improving the visual realism of the artificial plant. In this embodiment, the texture or pattern on the surface of BOPET is, for example, a dense crossed stripe, which can reduce the glossiness of BOPET to a level close to that of real plant organs, thereby avoiding excessive reflection that affects the simulation degree.

Referring to FIGs. 1 and 2, in some embodiments, in step S20, BOPET can be cut into a shape of leaf by, for example, an automatic cutting machine, which can improve productivity. For another example, BOPET can be cut manually using tools such as scissors. The artificial leaf prepared by cutting BOPET into the shape of leaf is soft in texture, has high tensile strength, and is not easily damaged. Optionally, the shape of leaf is, for example, strip, oval, heart, needle, palm, etc. In this embodiment, BOPET is cut into strip-shaped leaf.

On the other hand, since PET pellets are refined and polymerized from petroleum as raw materials, the PET pellets contain antimony. Although antimony-containing compounds have flame retardant effects, antimony is toxic and can damage human organs and even induce cancer. In the present disclosure, the antimony element in the PET pellets used to prepare BOPET is chemically replaced by titanium element. The titanium element has low harm to human body, thus the artificial plant produced is safer.

In the aforementioned method for manufacturing the artificial plant, BOPET with a desired color is prepared, and then the artificial leaf is prepared from BOPET. On the one hand, the artificial leaf prepared from BOPET has stronger tensile and impact resistances and is highly durable. On the other hand, the surface of BOPET can be directly printed with ink, which is a feature that traditional PVC artificial leaf does not have. Compared with dyeing or paint spraying, coloring by printing has higher coloring stability and uniformity, which reduces production costs and has higher production efficiency.

In addition, by adding various additives to the color masterbatch and/or the water-based ink, such as adding halogen-free flame retardant, anti-UV agent, color-changing agent and the like, the properties of BOPET can be further improved, such that the artificial plant prepared from BOPET also has corresponding properties to achieve application in more scenarios. It should be understood that, although the various steps in the flowcharts involved in the aforementioned embodiments are sequentially displayed as indicated by the arrows, these steps are not necessarily performed in the order indicated by the arrows. Unless explicitly stated herein, the performing order of these steps is not be limited strictly, and these steps may be performed in other orders. Moreover, at least a part of the steps in the flowcharts involved in the aforementioned embodiments may include a plurality of steps or phases, which are not necessary to be performed simultaneously, but may be performed at different times. The order of execution of these steps or stages is not necessarily sequential, but may be performed by turns or alternately with other steps or at least part of the steps or stages in other steps.

The present disclosure further provides an artificial plant manufactured from BOPET with the desired color. The artificial plant in the present disclosure can be manufactured by the manufacturing method provided in the aforementioned embodiments. The artificial plant provided according to the embodiments of the present disclosure has the advantage of not being easy to damage, and the artificial plant can be obtained by printing with the water-based ink, having the advantage of a high simulation degree.

The artificial plant may be in a multi-winding pattern, such as a double winding pattern. The thickness of the single sheet of BOPET can be, for example, equal to or more than 65 µm, which makes the artificial tree in the aforementioned "double winding" pattern not only dense and beautiful, but also closer to real trees.

In some embodiments, a crossed stripe is formed on the surface of the artificial plant or plant organ. Specifically, the surface is embossed by an embossing roller to form a crossed stripe, which can appropriately reduce the glossiness of BOPET and make it more closely resemble the real plant organ in terms of visual realism. The simulation degree of the artificial tree can be effectively improved by pasting artificial leaves with different glossiness on the artificial trunk according to the growth law of plants.

In some embodiments, by adding various additives to the color masterbatch and/or the water-based ink, such as adding halogen-free flame retardant, anti-UV agent, color-changing agent and the like, the properties of BOPET can be further improved, such that the artificial plant prepared from BOPET also has corresponding properties to achieve application in more scenarios.

In some embodiments, the present disclosure further provides a method for manufacturing an artificial leaf. The method includes the following steps: preparing a biaxially oriented polyester film with a desired color; and cutting the biaxially oriented polyester film into a shape of leaf. In some embodiments, after preparing the biaxially oriented polyester film with the desired color, the method further includes: embossing the biaxially oriented polyester film to form an uneven embossing on a surface of the biaxially oriented polyester film.

For this method, the content of preparing the raw material of polyethylene terephthalate particles is the same as the content of preparing the raw material of polyethylene terephthalate particles described in the first aspect above, and will not be repeated here.

### Example

In order to more clearly describe and understand the method and product of the present disclosure, details of the present disclosure are further illustrated and described below using an artificial tree as an example of an artificial plant.

The materials and instruments involved in these examples were all common materials and instruments in the art, and the materials can be prepared by oneself or purchased from the market.

### Example 1: Preparation of BOPET with desired color

### Example 1.1: Preparation of PET pellets

A transparent PET plastic water bottle was recycled and crushed into PET pellets, in this example in the form of scraps, using a crusher. In the present disclosure, the recycling rate of the PET plastic product can reach 100%, that is, the raw materials for preparation can use the crushed PET pellets completely, without adding or supplementing other substances as main raw materials.

### Example 1.2: Preparation of BOPET without printing

The PET pellets prepared in Example 1.1 were used, and various green masterbatches were uniformly incorporated therein, to prepare PET pellets with different colors, wherein a semi-matt agent was added into the color masterbatches. Depending on the color, different amounts of matting agent may be added to achieve the desired effect, which can be adjusted by those skilled in the art.

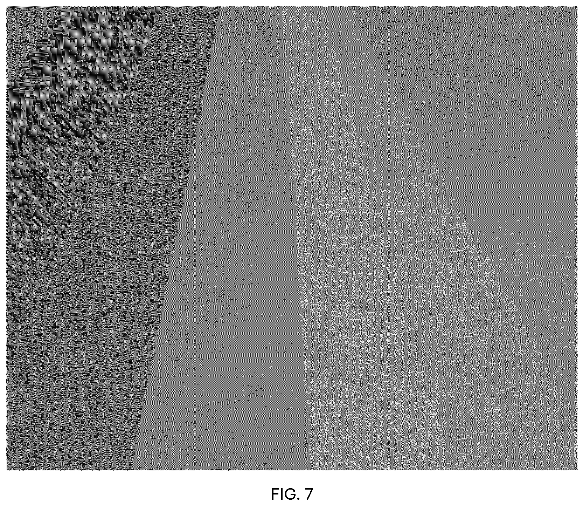

The PET pellets with different colors were respectively loaded in a large barrel for drying, and then extruded into a sheet using an extruder. The thick sheet was then stretched longitudinally and transversely, then rolled up, slit and packaged, waiting for subsequent processing. As shown in FIG. 7, various green matte BOPET were obtained.

### Example 1.3: Preparation of BOPET (with color masterbatch incorporated) printed with transparent matte water-based ink

The PET pellets prepared in Example 1.1 were used, and a green masterbatch was uniformly incorporated therein to prepare green PET pellets.

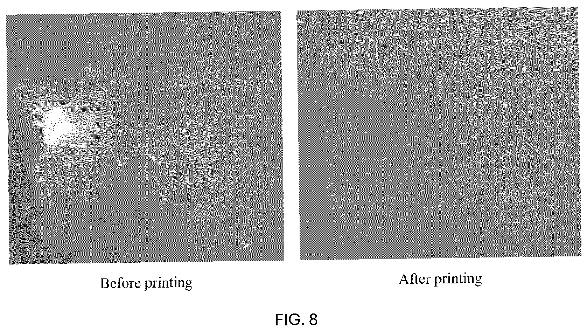

The green PET pellets were loaded in a large barrel for drying, and then extruded into a sheet using an extruder. The thick sheet was then stretched longitudinally and transversely, then rolled up, slit and packaged, waiting for subsequent processing. As shown in the left panel of FIG. 8, green BOPET with bright surface was obtained. Then, the obtained green BOPET with bright surface was colored by printing on both sides by a high-speed printer using a laser etched roller, with transparent semi-matt matte water-based ink. Then a green matte BOPET was finally obtained.

As shown in FIG. 8, the left panel shows BOPET before printing, and the right panel shows BOPET after printing. It can be seen that the color saturation and glossiness were changed after printing.

### Example 1.4: Preparation of BOPET (with color masterbatch incorporated) printed with inks of various colors

According to the requirements of the final product, the production process was designed in advance, in which a whole sheet of BOPET was divided into four parts. As shown in FIG. 9, it was planned to design the first part as a continuous gourd-shaped brown part in the middle, the second part as a dark green part close to the first part, the third part as a thin striped white part spanning the second and fourth parts, and the fourth part as a light green part close to the edge.

The PET pellets prepared in Example 1.1 were used, and a light green semi-matt masterbatch was uniformly incorporated therein to prepare green PET pellets.

The light green PET pellets were loaded in a large barrel for drying, and then extruded into a sheet using an extruder. The thick sheets were then stretched longitudinally and transversely, then rolled up, slit and packaged, waiting for subsequent processing. At this point, a whole sheet of light green matte BOPET was obtained (this color was the light green of the fourth part).

Then, the first and second parts were printed as a whole simultaneously by a high-speed printer using a laser etched roller with dark green semi-matt water-based ink (wherein the water-based ink contained semi-matt agent, PTFE, soybean oil, halogen-free flame retardant, anti-UV agent, and thermochromic powder), such that the first and second parts presented dark green. Then, the first part was overlay printed using brown semi-matt water-based ink, such that the first part presented brown. Finally, the third part was printed using white semi-matt water-based ink, such that the third part presented white. There was no particular limitation on the order of performing brown printing and white printing, which had no influence on the effect of the product after printing, and can be adjusted as required. Finally, a double-sided multi-colored matte BOPET with specific color distribution was obtained. In this example, three single-sheet BOPET with thicknesses of 50 µm, 70 µm, and 100 µm were prepared.

### Example 1.5: Preparation of BOPET (without color masterbatch incorporated) printed with inks of various colors

The PET pellets prepared in Example 1.1 were used, the transparent PET pellets were loaded in a large barrel for drying, and then extruded into a sheet using an extruder. The thick sheets were then stretched longitudinally and transversely, then rolled up, slit and packaged, waiting for subsequent processing. At this point, a whole sheet of transparent BOPET was obtained.

The whole sheet of transparent BOPET was first printed by a high-speed printer using a laser etched roller with light green semi-matt water-based ink (the water-based ink contained semi-matt agent, PTFE, soybean oil, halogen-free flame retardant, anti-UV agent, and thermochromic powder), to obtain a light green matte BOPET. Then, the first and second parts were printed as a whole simultaneously by a high-speed printer using a laser etched roller with dark green semi-matt water-based ink, such that the first and second parts presented dark green. Then, the first part was overlay printed using brown semi-matt water-based ink, such that the first part presented brown. Finally, the third part was printed using white semi-matt water-based ink, such that the third part presented white. There was no particular limitation on the order of performing brown printing and white printing, which had no influence on the effect of product after printing, and can be adjusted as required. Finally, a double-sided multi-colored matte BOPET with specific color distribution was obtained. In this example, three single-sheet of BOPET with thicknesses of 50 µm, 70 µm, and 100 µm were prepared.

### Example 2: Cutting of BOPET to form an artificial plant organ

In this example, an artificial plant organ was manufactured with a double winding pattern. Two sheets of double-sided multi-colored matte BOPET with specific color distribution obtained in Example 1.4 or 1.5 (as shown in the upper panel in FIG. 9) were placed in a parallel operating position by a stretching machine, and then the two sheets of BOPET were cut separately and simultaneously according to design requirements. In this example, artificial leaves and artificial branches were designed to be integrally manufactured. Specifically, the cutting was performed transversely along the middle position between adjacent white lines, along the direction indicated by the arrows in the upper panel of FIG. 9, from both sides (only the right arrows were shown in the panel) toward the middle brown part, until for example, it touched the brown part or nearby. Alternatively, the cutting can be performed from top to bottom in a direction perpendicular to BOPET according to the machine settings. No matter in what way, as long as the cutting was able to be completed as required. The specific cutting size can be adjusted as required.

After cutting, two sheets of BOPET were wound around two iron wires, respectively, and then the two wound branches were wound together to form a single, denser branch. Iron wires with suitable length and diameter were used according to the required design. As shown in the lower panel of FIG. 9, a branch with green leaves and brown trunk was obtained. Multiple branches can be prepared as required.

### Example 3: Assembly of artificial plant

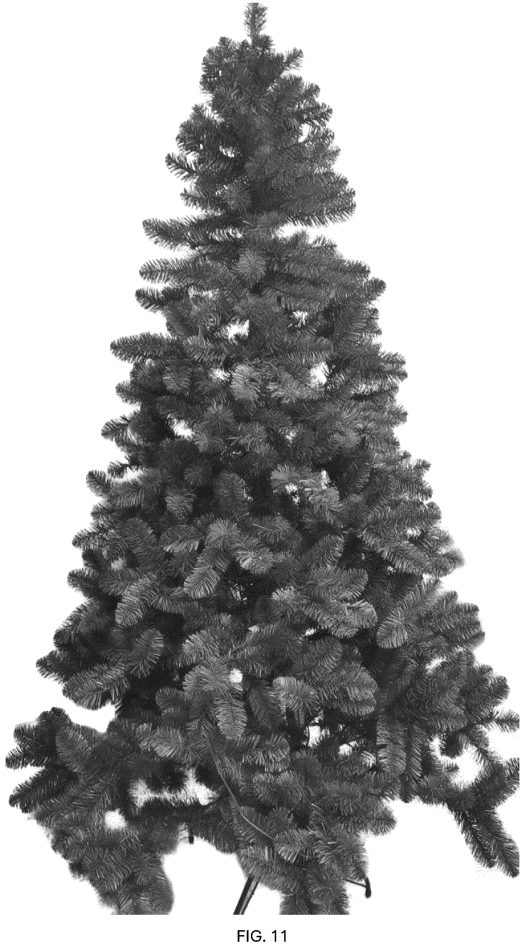

According to the design requirements and taking the actual shape and characteristics of the tree into consideration, the multiple branches obtained in Example 2 were assembled together. FIG. 11 shows an example of an assembled artificial tree, which can be used as a Christmas tree. Samples of tree product manufactured from Example 1.4 were used as Sample 1 (thickness of 50 µm), Sample 2 (thickness of 70 µm), and Sample 3 (thickness of 100 µm), and samples of tree product manufactured from Example 1.5 were used as Sample 4 (thickness of 50 µm), Sample 5 (thickness of 70 µm), and Sample 6 (thickness of 100 µm).

Comparative Example 1: Artificial tree manufactured from BOPET without additives

An artificial tree product of Example 3 was manufactured using the same method again, except that, in the preparation process of BOPET, only color masterbatch was added, without any additives such as matting agent, PTFE, soybean oil, halogen-free flame retardant, anti-UV agent, and thermochromic agent, and the like.

### Example 4: Performance Test

The samples of the artificial trees obtained in Example 3 and Comparative Example 1 were tested for various performance. Each sample was tested three times in parallel. The test standards or test conditions and results are shown in Table 1 below.

Test environment: room temperature: 25±5°C; relative humidity: 50%+/-20%; luminance: 500-1000 Lux.

Visual conditions: the inspectors had good eyesight and their eyes were 30-40 cm away from the sample during inspection.

Visual inspection time: the inspection time for the appearance of each sample was 8-15 seconds.

**Table 1**

| Test type | Test standard, Test condition, and Acceptance criteria | Test Result | | | | | | |
|---|---|---|---|---|---|---|---|---|
| | | Comparative Example Sample | Example Sample 1 | Example Sample 2 | Example Sample 3 | Example Sample 4 | Example Sample 5 | Example Sample 6 |
| Color fastness to rubbing | EN ISO 105-X12, AATCC 8, EN 13138-1/-2/-3, EN ISO 25649-1; | unqualified | qualified | qualified | qualified | qualified | qualified | qualified |
| Test | Use a friction tester with a head load of 9 N, rub with cotton cloth, speed of 1 cycle/second, stroke of 104±3 mm, and rub for 10 cycles; | | | | | | | |
| | Acceptance criteria: the staining grade should be greater or equal to Grade 4; no obvious fading, discoloration, ink shedding, or bottom exposure of the sample ink. | | | | | | | |
| Flame retardant Test | UL 588; | unqualified | qualified | qualified | qualified | qualified | qualified | qualified |
| | For a 6-inch sample, ignite the top part and keep the flame in contact with the sample for 5 seconds before removing the flame; | | | | | | | |
| | Acceptance criteria: combustion rate ≤ 4 in/min. | | | | | | | |
| UV aging Test | ISO 4892-3, GB/T 16422.3; | unqualified | qualified | qualified | qualified | qualified | qualified | qualified |
| | Drying: 0.76 w/m², 60±3°C *8h; | | | | | | | |
| | Condensation: 50±3°C *4h; perform 8 cycles for a total of 96 h; | | | | | | | |
| | Acceptance criteria: discoloration level ≥Grade 4, no cracks, brittleness, or the like on the surface. | | | | | | | |
| High temperatu re Test | 60±2°C, 48 h; | unqualified | qualified | qualified | qualified | qualified | qualified | qualified |
| | Acceptance criteria: no damage to the surface appearance, no change in color. | | | | | | | |
| Low temperatu re Test | Low temperature -20±2°C, 48h; | unqualified | qualified | qualified | qualified | qualified | qualified | qualified |
| | Acceptance criteria: no damage to the surface appearance, no change in color. | | | | | | | |
| Adhesion Test | GB/T 9286, ISO 2409, ASTM D3359; | unqualified | qualified | qualified | qualified | qualified | qualified | qualified |
| | Stick a 3M810 tape on the sample, press back and forth with a finger 3 times for 15 seconds, then quickly tear off the tape; | | | | | | | |
| | Acceptance criteria: no obvious discoloration. | | | | | | | |
| Elasticity Test | Width 40 mm × length 460 mm, place at room temperature for 10 min; wind around a small rubber tube and tie with a rubber band, and place at 50°C*20 min (small rubber tube having a diameter of 25 mm); unfold the sample and measure the diameter of the sample; | unqualified | qualified | qualified | qualified | qualified | qualified | qualified |
| | Acceptance criteria: ≥ 30 mm. | | | | | | | |
| Folding Test | Fold the sample twice, press with glass sheets on top and bottom, load 3 kg weight on the top, and place at a high temperature of 60°C for 48 h; a low temperature of -20°C for 48 h; | unqualified | qualified | qualified | qualified | qualified | qualified | qualified |
| | Acceptance criteria: no crack at the fold. | | | | | | | |
| Temperat ure change Test | Place the sample at each set temperature and observe the color change; | No color change property | Comply with temperat ure change property, the color change can be seen in FIG. 10 | Comply with temperat ure change property, the color change can be seen in FIG. 10 | Comply with temperat ure change property, the color change can be seen in FIG. 10 | Comply with temperat ure change property, the color change can be seen in FIG. 10 | Comply with temperat ure change property, the color change can be seen in FIG. 10 | Comply with temperat ure change property, the color change can be seen in FIG. 10 |
| | Acceptance criteria: correct color change. | | | | | | | |
| Matte Test | Visual inspect for matte finish | unqualified | qualified | qualified | qualified | qualified | qualified | qualified |

It can be concluded from the above table that the artificial trees with various additives have many excellent properties, such as matte, good flame retardancy, excellent resistance to UV aging, high and low temperature resistance, strong adhesion, good elasticity, good folding performance, and the color can be changed according to temperature. These excellent properties can make the artificial plants more widely used in various fields.

Each of the technical features of the aforementioned embodiments can be combined arbitrarily. To simplify the description, not all the possible combinations of the technical features in the aforementioned embodiments are described. However, all of the combinations of these technical features should be considered as within the scope of the present disclosure, as long as such combinations do not contradict with each other.

The aforementioned embodiments merely illustrate several embodiments of the present disclosure, and the description thereof is specific and detailed, but it shall not be constructed as limiting the scope of the disclosure. It should be noted that a plurality of variations and modifications may be made by those skilled in the art without departing from the conception of the present disclosure, which are all within the protection scope of the present disclosure. Therefore, the protection scope of the present disclosure shall be subject to the appended claims.

## Claims

1. A method for manufacturing an artificial plant, comprising the following steps:
preparing a biaxially oriented polyester film with a desired color;
cutting the biaxially oriented polyester film into a desired shape to assemble into an artificial plant organ; and
assembling the artificial plant organ into the artificial plant.

2. The method for manufacturing the artificial plant of claim 1, wherein:
(a) the artificial plant organ comprises an artificial root, an artificial stem, an artificial leaf, an artificial flower, an artificial fruit, and an artificial seed; or
(b) after preparing the biaxially oriented polyester film with the desired color, the method further comprises:
embossing the biaxially oriented polyester film to form an uneven embossing on a surface of the biaxially oriented polyester film.

3. The method for manufacturing the artificial plant of claim 1, wherein preparing the biaxially oriented polyester film with the desired color comprises:
preparing polyethylene terephthalate pellets;
incorporating a color masterbatch into the polyethylene terephthalate pellets; and
preparing the biaxially oriented polyester film from the polyethylene terephthalate pellets incorporated with the color masterbatch, wherein the biaxially oriented polyester film presents the desired color.

4. The method for manufacturing the artificial plant of claim 1, wherein preparing the biaxially oriented polyester film with the desired color comprises:
preparing polyethylene terephthalate pellets;
incorporating a color masterbatch into the polyethylene terephthalate pellets;
preparing the biaxially oriented polyester film from the polyethylene terephthalate pellets incorporated with the color masterbatch; and
coloring the biaxially oriented polyester film by printing using a water-based ink, such that a surface of the biaxially oriented polyester film presents the desired color.

5. The method for manufacturing the artificial plant of claim 1, wherein preparing the biaxially oriented polyester film with the desired color comprises:
preparing polyethylene terephthalate pellets;
obtaining the biaxially oriented polyester film from the polyethylene terephthalate pellets; and
coloring the biaxially oriented polyester film by printing using a water-based ink, such that a surface of the biaxially oriented polyester film presents the desired color.

6. The method for manufacturing the artificial plant of any one of claims 3 to 5, wherein preparing the polyethylene terephthalate pellets comprises:
crushing a recycled plastic product of polyethylene terephthalate material to obtain the polyethylene terephthalate pellets.

7. The method for manufacturing the artificial plant of claim 4 or 5, wherein:
(a) coloring the biaxially oriented polyester film by printing using the water-based ink comprises: coloring the biaxially oriented polyester film by single or multiple printings using water-based inks of one or more colors according to a desired design; or
(b) the water-based ink comprises a color water-based ink, a matte water-based ink, or a combination thereof; or
(c) the water-based ink is printed by a laser etched roller; or
(d) the water-based ink comprises one or more additives selected from the following: light stabilizer, antistatic agent, flame retardant, anti-UV agent, antioxidant, matting agent, brightener, foaming agent, color-changing agent, and antibacterial agent; or
(e) the water-based ink comprises a vegetable oil; or
(f) the water-based ink comprises polytetrafluoroethylene.

8. The method for manufacturing the artificial plant of claim 5 or 6, wherein the color masterbatch comprises one or more additives selected from the following: light stabilizer, antistatic agent, flame retardant, anti-UV agent, antioxidant, matting agent, brightener, foaming agent, color-changing agent, and antibacterial agent.

9. An artificial plant, manufactured by the method of any one of claims 1 to 8.

10. A method for manufacturing an artificial leaf, comprising the following steps:
preparing a biaxially oriented polyester film with a desired color; and
cutting the biaxially oriented polyester film into a shape of leaf.

11. The method for manufacturing the artificial leaf of claim 10, wherein after preparing the biaxially oriented polyester film with the desired color, the method further comprises:
embossing the biaxially oriented polyester film to form an uneven embossing on a surface of the biaxially oriented polyester film.

12. The method for manufacturing the artificial leaf of claim 10, wherein preparing the biaxially oriented polyester film with the desired color comprises:
preparing a raw material of polyethylene terephthalate particles;
incorporating a color masterbatch into the raw material of polyethylene terephthalate particles; and
preparing the biaxially oriented polyester film from the raw material of polyethylene terephthalate particles incorporated with the color masterbatch, wherein the biaxially oriented polyester film presents the desired color.

13. The method for manufacturing the artificial leaf of claim 10, wherein:
(a) preparing the biaxially oriented polyester film with the desired color comprises:
preparing a raw material of polyethylene terephthalate particles;
incorporating a color masterbatch into the raw material of polyethylene terephthalate particles;
preparing the biaxially oriented polyester film from the raw material of polyethylene terephthalate particles incorporated with the color masterbatch; and
coloring the biaxially oriented polyester film by printing using a water-based ink, such that a surface of the biaxially oriented polyester film presents the desired color;
or
(b) preparing the biaxially oriented polyester film with the desired color comprises:
preparing a raw material of polyethylene terephthalate particles;
obtaining the biaxially oriented polyester film from the raw material of polyethylene terephthalate particles; and
coloring the biaxially oriented polyester film by printing using a water-based ink, such that a surface of the biaxially oriented polyester film presents the desired color.

14. The method for manufacturing the artificial leaf of claim 13, wherein:
(a) the water-based ink comprises a color water-based ink, a matte water-based ink, or a combination thereof; or
(b) the water-based ink is printed by a laser etched roller; or
(c) the water-based ink comprises polytetrafluoroethylene; or
(d) the water-based ink comprises a vegetable oil.

15. The method for manufacturing the artificial leaf of claim 12 or 13, wherein preparing the raw material of polyethylene terephthalate particles comprises:
crushing a recycled plastic product of polyethylene terephthalate material to obtain the raw material of polyethylene terephthalate particles.

16. An artificial leaf, manufactured from a biaxially oriented polyester film with a desired color.

17. The artificial leaf of claim 16, wherein a crossed stripe is formed on a surface of the artificial leaf.
